# EUROPÄISCHE PATENTSCHRIFT

(11) **EP 3 325 859 B1**
(45) Veröffentlichungstag und Bekanntmachung des Hinweises auf die Patenterteilung: **12.06.2019**
(21) Anmeldenummer: 16713914.6
(22) Anmeldetag: 04.04.2016
(51) Int. Cl.: F16K 11/074, F01P 7/16

(54) **KÜHLMITTELVERTEILUNGSMODUL FÜR EINEN KÜHLMITTELKREISLAUF**
COOLANT DISTRIBUTION MODULE FOR A COOLANT CIRCUIT
MODULE DE RÉPARTITION D'UN AGENT DE REFROIDISSEMENT POUR UN CIRCUIT DE REFROIDISSEMENT

(30) Priorität: 22.07.2015 DE 102015213857
(43) Veröffentlichungstag der Anmeldung: 30.05.2018
(73) Patentinhaber: Volkswagen Aktiengesellschaft, 38440 Wolfsburg (DE)
(72) Erfinder: MEIER, Markus, 38100 Braunschweig (DE); KRUMREY, Moritz, 31319 Sehnde (DE)
(86) Internationale Anmeldenummer: PCT/EP2016/057318
(87) Internationale Veröffentlichungsnummer: WO 2017/012722

(56) Entgegenhaltungen:
- WO-A1-03/006856
- DE-A1- 19 932 313
- DE-A1-102012 224 369
- US-A1- 2005 034 688

## Beschreibung

Die Erfindung betrifft ein Kühlmittelverteilungsmodul für einen Kühlmittelkreislauf, der mindestens einen Kühlmittelkanal zu mindestens einer Wärmequelle und mindestens einen Kühlmittelkanal zu einer Wärmesenke aufweist, insbesondere für ein Aggregat, insbesondere für eine Kraftmaschine, insbesondere für eine Brennkraftmaschine, mit einem Gehäuse mit mindestens drei von Kühlmittel durchströmbaren Anschlüssen zum fluidleitenden Verbinden mit den mindestens zwei Kühlmittelkanälen, wobei in dem Gehäuse ein relativ zum Gehäuse drehbarer Drehschieber mit Steueröffnungen angeordnet ist, welcher mit den Steueröffnungen wahlweise fluidleitende Verbindungen zwischen den Anschlüssen mit variierendem Strömungsquerschnitt herstellt oder unterbricht, wobei an jedem Anschluss mindestens ein Dichtungspaket zwischen dem Gehäuse und dem Drehschieber derart angeordnet ist, dass jedes Dichtungspaket einen Fluid leitenden Kanal zwischen dem Drehschieber und dem Gehäuse ausbildet und diesen Fluid leitenden Kanal an einer Anschlagfläche zwischen Dichtungspaket und Gehäuse einerseits sowie zwischen Dichtungspaket und Drehschieber andererseits fluiddicht abdichtet, gemäß dem Oberbegriff des Patentanspruchs 1.

Zur Regelung mehrerer Kühlmittel-Volumenströme zur Temperaturregelung eines Aggregats, welches mehrere Wärmequellen unterschiedlicher Leistung aufweist, wird die Volumenstromregelung durch einen Mechanismus dargestellt, welcher von einem elektrischen Stellglied angetrieben wird. Der Regelmechanismus ist zum schnellen Erreichen der Betriebstemperatur und exaktem Erhalten letzterer durch bedarfsgerechten Kühlmittel-Volumenstrom erforderlich.

In heutigen Brennkraftmaschinen umfasst das Kühlsystem mehrere Kühlmittelkreise bzw. Kühlmittelkanäle, die gleichzeitig oder zeitlich verschoben eingeschaltet bzw. beaufschlagt werden können. Durch eine gezielte Verteilung des Kühlwasserstroms auf die Kühlmittelkreise kann die Brennkraftmaschine im Bereich der optimalen Kühlmitteltemperatur betrieben werden. Gleichzeitig kann mit dieser Maßnahme die Einhaltung der zulässigen Grenztemperaturen für Motor und Getriebe sichergestellt werden. Dazu sind Kühlsysteme bekannt, die ein Thermomanagement- oder ein Wärmemanagementmodul einschließen, bei dem eine Kühlmittelpumpe, ein elektrisch ansteuerbarer Stellantrieb sowie als Drehschieber ausgebildete Ventilglieder in einem Gehäuse integriert sind. Der Drehschieber regelt einen Kühlmittelstrom, indem ein Durchflussquerschnitt in Abhängigkeit der Drehwinkelposition des Drehschiebers verändert wird. Der drehbar in dem Gehäuse gelagerte Drehschieber steht mit Gehäuseöffnungen des Drehschiebergehäuses in Wirkverbindung, über die dem Drehschieber der Kühlmittelstrom zugeführt wird.

Aus der DE 10 2013 209 582 A1 ist ein Kühlsystem einer Brennkraftmaschine bekannt, das zumindest zwei Kühlmittelkreisläufe aufweist und zur Regelung von Kühlmittelströmen ein Thermomanagementmodul einschließt. Dieses Thermomanagementmodul besteht aus einem Drehschiebergehäuse, das von Kühlmittel durchströmbare Anschlüsse umfasst und in dem ein um eine Drehachse drehbarer, mit Abgängen zusammenwirkender Drehschieber eingesetzt ist, der über einen Stellantrieb verstellbar ist. Der als Hohlkugel ausgebildete Drehschieber weist zumindest zwei zueinander versetzte Regelspuren auf, die mit den radial ausgerichteten Abgängen in Verbindung stehen. Zur Abdichtung eines Ringspaltes zwischen dem Drehschieber und dem Drehschiebergehäuse sind Dichtungspakete vorgesehen.

Dies hat jedoch den Nachteil, dass nur radiale Schieberflächen der Drehschiebereinheit mit Steuerschlitzen versehen sind. Eine axiale Durchströmung ist zwar vorhanden, jedoch nicht regelbar. Solche Volumenströme, die zwei gesteuerte Kanäle passieren sollen, müssen in einem engen Radius um min. 90° umgelenkt werden, was zu unerwünschten Druckverlusten führt.

Im Dokument US 2005/034688 A1 wird ein Kühlmittelverteilungsmodul für einen Kühlmittelkreislauf mit einem Kühlmittelkanal zu einer Brennkraftmaschine und drei Kühlmittelkanälen zu Wärmesenken aufweist, wobei das Gehäuse vier Anschlüsse zum fluidleitenden Verbinden mit Kühlmittelkanälen aufweist. Im Gehäuse ist ein Drehschieber in Form eines Hohlzylinders mit einer Stirnwand mit Steueröffnungen angeordnet. Die Steueröffnungen können wahlweise fluidleitende Verbindungen zwischen den Anschlüssen mit variablen Strömungsquerschnitten herstellen oder unterbrechen. An jedem Anschluss gibt es ein Dichtungspaket, das einen fluidleitenden Kanal zwischen dem Drehschieber und dem Gehäuse ausbildet, wobei der fluidleitende Kanal an der Anschlagsfläche zum Gehäuse und an der Anschlagsfläche zum Drehschieber abgedichtet wird.

Der Erfindung liegt die Aufgabe zugrunde, ein Kühlmittelverteilungsmodul der o.g. Art hinsichtlich Bauraumbedarf und Funktion zu verbessern.

Diese Aufgabe wird erfindungsgemäß durch ein Kühlmittelverteilungsmodul der o.g. Art mit den in Anspruch 1 gekennzeichneten Merkmalen gelöst. Vorteilhafte Ausgestaltungen der Erfindung sind in den weiteren Ansprüchen beschrieben.

Dazu ist es bei einem Kühlmittelverteilungsmodul der o.g. Art erfindungsgemäß vorgesehen, dass der Drehschieber als Hohlzylinder mit Zylinderwand ausgebildet ist, welcher in axialer Richtung an einem ersten Ende eine erste Stirnwand und an einem axial gegenüberliegenden zweiten Ende eine zweite Stirnwand aufweist, wobei in der Zylinderwand des Hohlzylinders, in der ersten Stirnwand und in der zweiten Stirnwand jeweils mindestens eine Steueröffnung ausgebildet ist. Die Zylinderwand ist beispielsweise gekrümmt, insbesondere als Teilfläche einer Kugel, ausgebildet.

Dies hat den Vorteil, dass Stirnwände und Zylinderwand des Drehschiebers als Steuerelemente genutzt werden, so dass auf einfache Weise und ohne Umlenkung des Volumenstromes des Kühlmittels in engen Radien eine Steueröffnung für mehrere Anschlüsse des Gehäuses verwendet werden kann.

Eine einfache und funktionssichere Lagerung des Drehschiebers in dem Gehäuse ohne Einschränkung der Drehbarkeit des Drehschiebers innerhalb des Gehäuses erzielt man dadurch, dass mindestens zwei der Dichtungspakete derart angeordnet und ausgebildet sind, dass diese eine axiale Führung des Drehschiebers innerhalb des Gehäuses ausbilden.

Eine besonders große Variabilität der Aufteilung von Kühlmittelströmen erzielt man dadurch, dass das Gehäuse einen ersten Anschluss für einen ersten Kühlmittelstrom von dem Gehäuse zu einer Kühlmittel-Umwälzpumpe, einen zweiten Anschluss für einen siebten Kühlmittelstrom von einer Kühlmittel-Umwälzpumpe zu dem Gehäuse und einen zweiten Kühlmittelstrom von einer ersten Wärmequelle, insbesondere einem Zylinderkurbelgehäuse, zu dem Gehäuse, einen dritten Anschluss für einen dritten Kühlmittelstrom von dem Gehäuse zu der Wärmesenke, insbesondere in Form eines Kühlers, und einen vierten Anschluss für einen vierten Kühlmittelstrom von einer zweiten Wärmequelle, insbesondere einem Zylinderkopf, zum Gehäuse aufweist.

Eine besonders klein bauendes Kühlmittelverteilungsmodul erzielt man dadurch, dass der erste und vierte Anschluss an der zweiten Stirnwand des Drehschiebers, der zweite Anschluss an der Zylinderwandung des Drehschiebers und der dritte Anschluss an der ersten Stirnwand des Drehschiebers angeordnet ist, wobei in der ersten Stirnwand eine erste Steueröffnung für den dritten Anschluss, in der zweiten Stirnwand eine zweite und eine dritte Steueröffnung für den ersten und vierten Anschluss sowie in der Zylinderwand des Hohlzylinders eine vierte und eine fünfte Steueröffnung für den zweiten Anschluss ausgebildet sind.

Zum temperaturabhängigen Steuern eines Kühlmittelstromes von dem Zylinderkurbelgehäuse zu dem Gehäuse ist in dem zweiten Anschluss ein Thermostatventil für den Kühlmittelstrom von dem Zylinderkurbelgehäuse zu dem Gehäuse angeordnet.

Eine Überbrückung der Kühlers mit einem kleinen Kühlmittelkanal zum schnellen Aufwärmen des Systems auf Betriebstemperatur erzielt man dadurch, dass die erste, zweite, dritte und vierte Steueröffnung derart angeordnet und ausgebildet sind, dass in einer ersten Stellung des Drehschiebers der dritte Anschluss geschlossen und der erste, zweite und vierte Anschluss geöffnet sind.

Eine einfache und wenig Bauraum benötigende Anordnung zum Betätigung des Drehschiebers erzielt man dadurch, dass ein Aktuator, insbesondere ein Elektromotor, zum Verstellen des Drehschiebers an dem Kühlmittelverteilungsmodul angeordnet ist, wobei eine Drehachse des Aktuators mit einer Drehachse des Drehschiebers drehfest verbunden ist.

Eine jeweils optimale Einstellung des Drehschiebers erzielt man dadurch, dass ein Steuergerät zum Ansteuern des Aktuators vorgesehen ist, wobei in dem Steuergerät Werte für Kühlmittelvolumenströme in Abhängigkeit von einem Betriebszustand der Wärmequelle und/oder der Wärmesenke in einem Kennfeld hinterlegt sind.

Eine besonders einfache Herstellung und Montage erzielt man dadurch, dass der Hohlzylinder und die erste Stirnwand einstückig und die zweite Stirnwand als separates Bauteil ausgebildet sind.

Die Erfindung wird im Folgenden anhand der Zeichnung näher erläutert. Diese zeigt in
- Fig. 1: eine bevorzugte Ausführungsform eines erfindungsgemäßen Kühlmittelverteilungsmoduls mit durchsichtigem Gehäuse in Vorderansicht;
- Fig. 2: das Kühlmittelverteilungsmodul gemäß Fig. 1 mit durchsichtigem Gehäuse in Rückansicht;
- Fig. 3: das Kühlmittelverteilungsmodul gemäß Fig. 1 und 2 in Explosionsdarstellung;
- Fig. 4: einen Drehschieber für das Kühlmittelverteilungsmodul gemäß Fig. 1 bis 3 in perspektivischer Vorderansicht;
- Fig. 5: den Drehschieber gemäß Fig. 4 für das Kühlmittelverteilungsmodul gemäß Fig. 1 bis 3 in perspektivischer Rückansicht;
- Fig. 6: das Kühlmittelverteilungsmodul gemäß Fig. 1 bis 3 in einer Schnittansicht in Höhe eines Aktuators;
- Fig. 7: eine Detailansicht von Fig. 6 mit einer mechanischen Verbindung zwischen dem Aktuator und dem Drehschieber;
- Fig. 8: eine Detailansicht eines Zylinderkurbelgehäuse-Anschlussflansches;
- Fig. 9: eine alternative Ausführungsform eines erfindungsgemäßen Kühlmittelverteilungsmoduls in Explosionsdarstellung;
- Fig. 10: die alternative Ausführungsform eines erfindungsgemäßen Kühlmittelverteilungsmoduls gemäß Fig. 9 in perspektivischer Ansicht im Zusammenbau;
- Fig. 11: eine Volumenstromdarstellung für die alternative Ausführungsform eines erfindungsgemäßen Kühlmittelverteilungsmoduls gemäß Fig. 9 für eine erste Stellung eines Drehschiebers und
- Fig. 12: eine Volumenstromdarstellung für die alternative Ausführungsform eines erfindungsgemäßen Kühlmittelverteilungsmoduls gemäß Fig. 9 für eine zweite Stellung eines Drehschiebers.

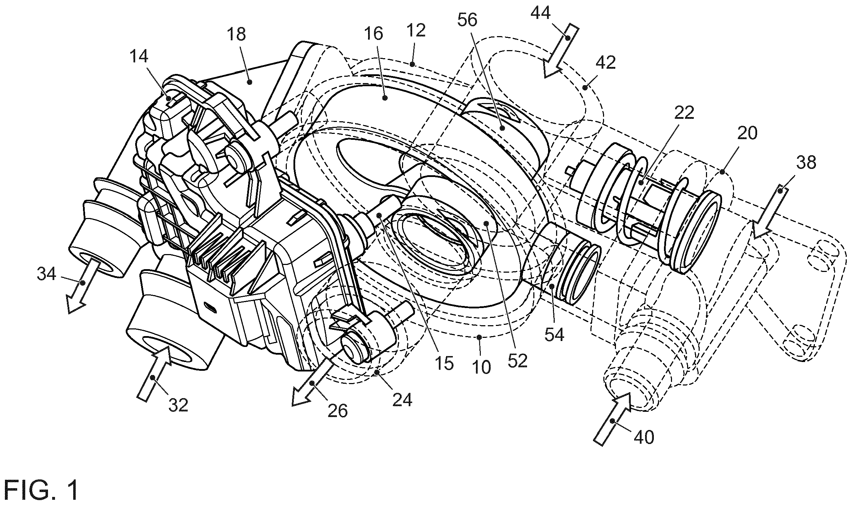

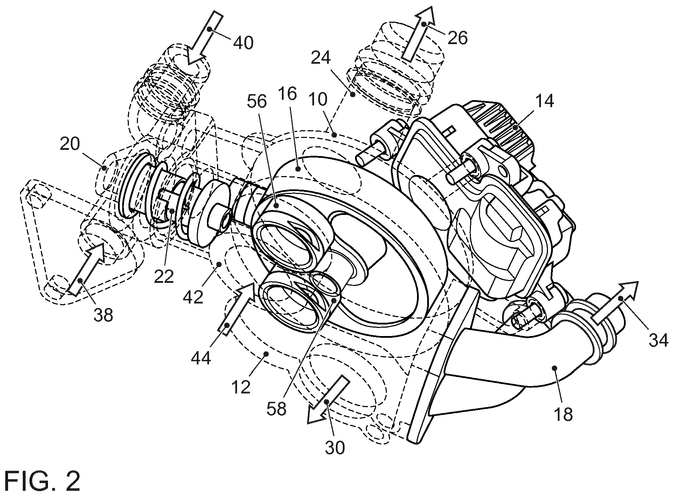

Die in Fig. 1 bis 5 dargestellte, bevorzugte Ausführungsform eines erfindungsgemäßen Kühlmittelverteilungsmoduls, beispielsweise für einen Kühlmittelkreislauf einer Brennkraftmaschine mit Wasser als Kühlmittel, umfasst ein Gehäuseoberteil 10, ein Gehäuseunterteil 12, einen Aktuator 14 mit Antriebwelle 15, einen Drehschieber 16, einen Hauptkühlmittelkühler-Anschlussflansch 18 und einen Zylinderkurbelgehäuse-Anschlussflansch 20. In dem Zylinderkurbelgehäuse-Anschlussflansch 20 ist ein Thermostatventil 22 angeordnet.

In dem Gehäuseoberteil 10 ist ein dritter Anschluss 24 für einen dritten Kühlmittelstrom 26 von dem Gehäuse 10, 12 zu einer Wärmesenke (nicht dargestellt), beispielsweise in Form eines Kühlers, angeordnet. In dem Gehäuseunterteil 12 ist ein erster Anschluss 28 für einen ersten Kühlmittelstrom 30 von dem Gehäuse 10, 12 zu einer Kühlmittelpumpe (nicht dargestellt), einen fünften Kühlmittelstrom 32 von der Wärmesenke zu dem Gehäuse 10, 12 und einen sechsten Kühlmittelstrom 34 von dem Gehäuse 10, 12 zu einer Kühlmittel-Umwälzpumpe (nicht dargestellt) ausgebildet. Der fünfte und sechste Kühlmittelstrom 32, 34 kreuzen sich über den Hauptkühlmittelkühler-Anschlussflansch 18 in den einen ersten Kühlmittelstrom 30 von dem Gehäuse 10, 12 zu einer Kühlmittelpumpe (nicht dargestellt). In dem Gehäuseunterteil 12 ist ferner ein zweiter Anschluss 36 für einen siebten Kühlmittelstrom 40 von der Kühlmittel-Umwälzpumpe (nicht dargestellt) zu dem Gehäuse 10, 12 angeordnet. Der zweite und siebte Kühlmittelstrom 38, 40 münden über den Zylinderkurbelgehäuse-Anschlussflansch 20 in den zweiten Anschluss 36. In dem Gehäuseunterteil 12 ist weiterhin ein vierter Anschluss 42 für einen vierten Kühlmittelstrom 44 von einer zweiten Wärmequelle (nicht dargestellt), wie beispielsweise einem Zylinderkopf einer Brennkraftmaschine, zu dem Gehäuse 10, 12 und der zweite Kühlmittelstrom 38 von einer ersten Wärmequelle (nicht dargestellt), wie beispielsweise einem Zylinderkurbelgehäuse einer Brennkraftmaschine, über das Thermostatventil 22 zu dem Gehäuse 10, 12 angeordnet.

In einem Hohlraum zwischen dem Gehäuseoberteil 10 und dem Gehäuseunterteil 12 ist der Drehschieber 16 angeordnet. Dieser setzt sich zusammen aus einem Hohlzylinder mit Zylinderwand 46, welcher an den gegenüberliegenden axialen Enden eine erste Stirnwand 48 und eine zweite Stirnwand 50 aufweist.

Zwischen dem Gehäuseoberteil 10 und der ersten Stirnwand 48 des Drehschiebers 16 ist ein drittes Dichtungspaket 52 angeordnet, welches einen fluidleitenden Kanal zwischen dem Drehschieber 16 und dem dritten Anschluss 24 in axialer Richtung bezogen auf den Drehschieber 16 herstellt. Hierbei dichtet das dritte Dichtungspaket 52 an ringförmigen Anlageflächen zwischen dem dritten Dichtungspaket 52 und dem Gehäuseoberteil 10 einerseits sowie dem dritten Dichtungspaket 52 und der ersten Stirnwand 48 andererseits diesen Fluidkanal am dritten Anschluss 24 fluiddicht ab.

Zwischen dem Gehäuseunterteil 12 und der Zylinderwand 46 des Drehschiebers 16 ist ein zweites Dichtungspakt 54 angeordnet, welches einen fluidleitenden Kanal zwischen dem Drehschieber 16 und dem zweiten Anschluss 36 herstellt. Hierbei dichtet das zweite Dichtungspaket 54 an ringförmigen Anlageflächen zwischen dem zweiten Dichtungspaket 54 und dem Gehäuseunterteil 12 einerseits sowie dem zweiten Dichtungspaket 54 und der Zylinderwand 46 andererseits diesen Fluidkanal am zweiten Anschluss 36 im Wesentlichen fluiddicht ab, wobei gewisse Leckagen auftreten können.

Zwischen dem Gehäuseunterteil 12 und der zweiten Stirnwand 50 des Drehschiebers 16 ist ein viertes Dichtungspaket 56 angeordnet, welches einen fluidleitenden Kanal zwischen dem Drehschieber 16 und dem vierten Anschluss 42 herstellt. Hierbei dichtet das vierte Dichtungspaket 56 an ringförmigen Anlageflächen zwischen dem vierten Dichtungspaket 56 und dem Gehäuseunterteil 12 einerseits sowie dem vierten Dichtungspaket 56 und der zweiten Stirnwand 50 des Drehschiebers 16 andererseits diesen Fluidkanal am vierten Anschluss 42 fluiddicht ab.

Zwischen dem Gehäuseunterteil 12 und der zweiten Stirnwand 50 des Drehschiebers ist ein erstes Dichtungspakt 58 angeordnet, welches einen fluidleitenden Kanal zwischen dem Drehschieber 16 und dem ersten Anschluss 28 herstellt. Hierbei dichtet das erste Dichtungspaket 58 an ringförmigen Anlageflächen zwischen dem ersten Dichtungspaket 58 und dem Gehäuseunterteil 12 einerseits sowie dem ersten Dichtungspaket 58 und der zweiten Stirnwand 50 andererseits diesen Fluidkanal am ersten Anschluss 28 fluiddicht ab.

Das erste, dritte und vierte Dichtungspaket 58, 52, 56 bilden eine axiale Führung für den Drehschieber 16.

Die erste Stirnwand 48 weist eine erste Steueröffnung 60 auf, die derart angeordnet und ausgebildet ist, dass diese in Abhängigkeit von einer Stellung bzw. einer Winkelstellung des Drehschiebers 16 den Fluidkanal über das dritte Dichtungspaket 52 zu dem dritten Anschluss 24 wahlweise verschließt oder mit variablem Strömungsquerschnitt öffnet. Mit anderen Worten wird der Fluidstrom 26 mit der ersten Steueröffnung 60 variiert.

Die zweite Stirnwand 50 weist eine zweite Steueröffnung 62 und eine dritte Steueröffnung 64 auf, die derart angeordnet und ausgebildet sind, dass diese in Abhängigkeit von einer Stellung bzw. einer Winkelstellung des Drehschiebers 16 die Fluidkanäle über das erste und vierte Dichtungspaket 58, 56 zu dem ersten und vierten Anschluss 28, 42 wahlweise verschließt oder mit variablem Strömungsquerschnitt öffnet.

Mit anderen Worten werden die Fluidströme 30, 32, 34 und 44 mit der zweiten und dritten Steueröffnung 62, 64 in Richtung und Stärke der Strömung variiert.

Die Zylinderwand 46 weist eine kreisförmige vierte Steueröffnung 66 und eine schlitzförmige fünfte Steueröffnung 68 auf, die derart angeordnet und ausgebildet sind, dass diese in Abhängigkeit von einer Stellung bzw. einer Drehwinkelstellung des Drehschiebers 16 den Fluidkanal über das zweite Dichtungspaket 54 zu dem zweiten Anschluss 36 wahlweise verschließt oder mit variablem Strömungsquerschnitt öffnet. Mit anderen Worten wird der Fluidstrom 38 und 40 mit der vierten und fünften Steueröffnung 66, 68 variiert.

Die erste, zweite und dritte Steueröffnung 60, 62 und 64 weisen jeweils einen nierenförmigen Öffnungsquerschnitt auf, die sich jedoch hinsichtlich Lage und Größe unterscheiden. Die erste und zweite Steueröffnung 60, 62 sind radial angeordnet, während die dritte Steueröffnung 64 senkrecht dazu angeordnet ist.

Die kreisförmige vierte Steueröffnung 66 dient als Bypass für den Thermostat 22. Die schlitzförmige fünfte Steueröffnung 68 soll einen Pilotvolumenstrom für den zweiten Kühlmittelstrom 38 vom Zylinderkurbelgehäuse zu dem Gehäuse 10, 12 ermöglichen. Die erste Steueröffnung 60 bestimmt den Volumenstrom 26, 32 des Kühlmittels über die Wärmesenke bzw. einen Kühler. Die zweite Steueröffnung 62 bestimmt einen Bypass-Volumenstrom für die Wärmesenke bzw. den Kühler, d.h. der Volumenstrom 44 von der zweiten Wärmequelle (Zylinderkopf), Volumenstrom 40 und der Volumenstrom 38 von der ersten Wärmequelle (Zylinderkurbelgehäuse) wird statt über die Wärmesenke am Anschluss 24 direkt zum Volumenstrom 30 zur Kühlmittelpumpe am Anschluss 28 geleitet.

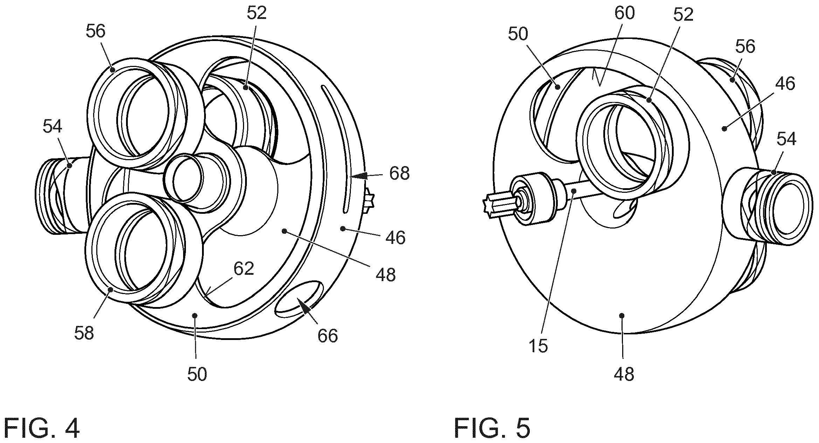

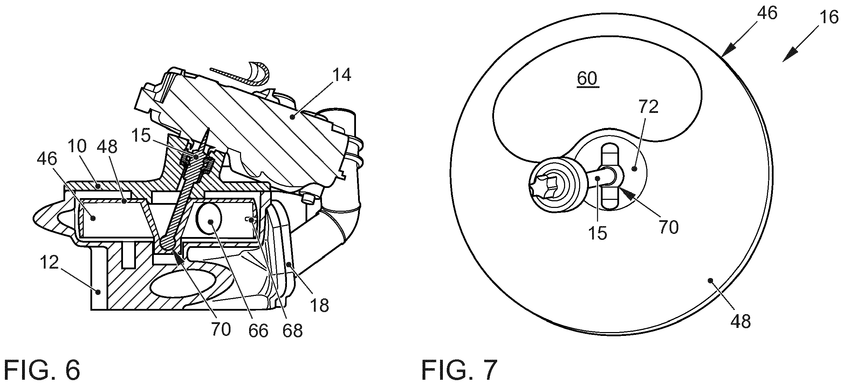

Die Betätigung des Drehschiebers 16 mittels des Aktuators 14 geht aus den Fig. 5 bis 7 hervor. Die Antriebswelle 15 weist an einem der ersten Stirnwand 48 zugewandten Ende ein Bipode-Gelenk 70 auf, wie aus der DE 196 11 175 C1 bekannt. Dieses greift in eine entsprechende Aufnahme 72 an der ersten Stirnwand 48.

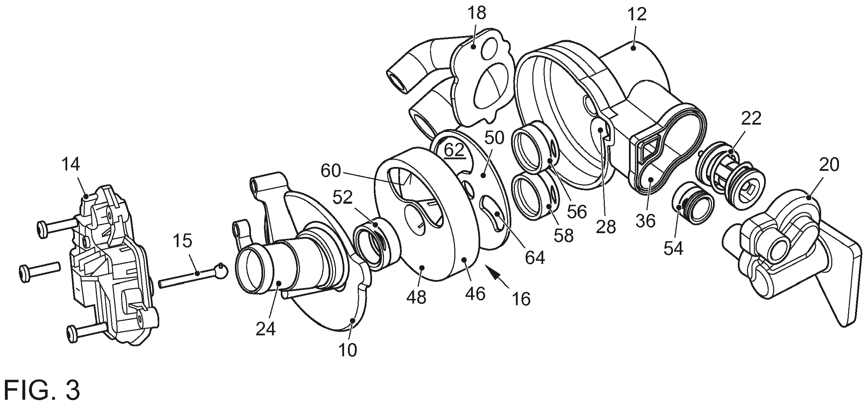

Wie insbesondere aus Fig. 3 ersichtlich, ist der Drehschieber 16 aus zwei Teilen zusammengesetzt. Ein Teil beinhaltet einteilig die erste Stirnwand 48 und die Zylinderwand 46. Das andere Teil bildet die zweite Stirnwand 50.

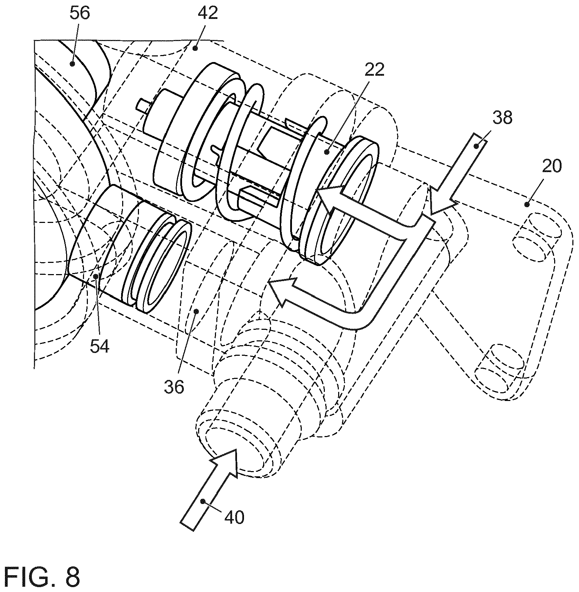

Fig. 8 zeigt eine Detailansicht des Zylinderkurbelgehäuse-Anschlussflansches 20, wobei in Fig. 8 gleiche Bezugszeichen identische Teile wie in den Fig. 1 bis 7 bezeichnen, so dass zu deren Erläuterung auf die obige Beschreibung der Fig. 1 bis 7 verwiesen wird. Der zweite Kühlmittelstrom 38 von der ersten Wärmequelle, wie beispielsweise einem Zylinderkurbelgehäuse einer Brennkraftmaschine, zu dem Gehäuse 10, 12 kann wahlweise über das Thermostat oder den zweiten Anschluss 36 strömen. Auf diese Weise kann mittels der kreisförmigen vierten Steueröffnung 66 das Thermostatventil 22 übersteuert werden.

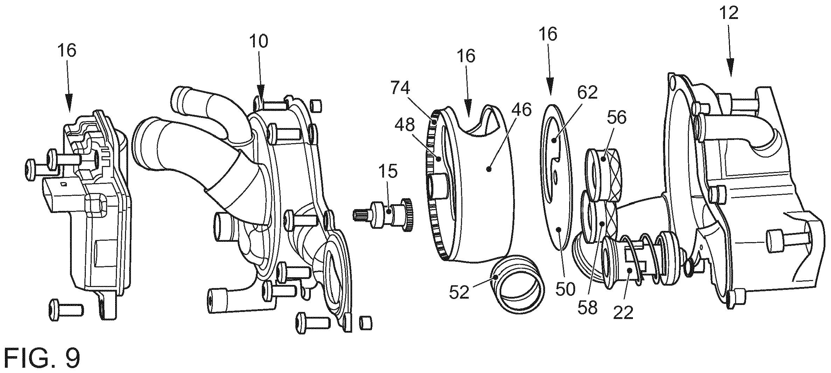

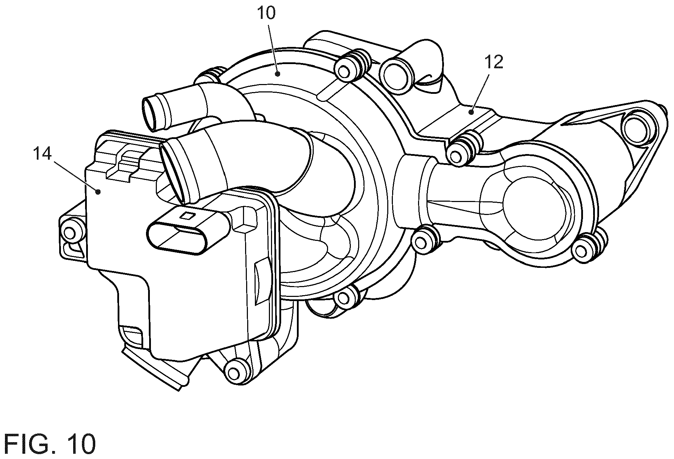

Fig. 9 und 10 veranschaulichen eine alternative Ausführungsform für ein erfindungsgemäßes Kühlmittelverteilungsmodul. In Fig. 9 und 10 sind funktionsgleiche Teile mit gleichen Bezugszeichen versehen wie in den Fig. 1 bis 8, so dass zu deren Erläuterung auf die obige Beschreibung der Fig. 1 bis 8 verwiesen wird. Im Unterschied zur ersten Ausführungsform gemäß der Fig. 1 bis 8 weist die Antriebswelle 15 an ihrem der ersten Stirnwand 48 zugewandten Ende ein Zahnrad auf, welches in eine Innenverzahnung 74 an der ersten Stirnwand 48 bzw. der Zylinderwand 46 des Drehschiebers 16 eingreift. Auf diese Weise ergibt sich ein Übersetzungsgetriebe zwischen dem Aktuator 14 und dem Drehschieber 16. Weiterhin ist die Zylinderwand 46 gekrümmt, insbesondere als Teilfläche einer Kugel, ausgebildet.

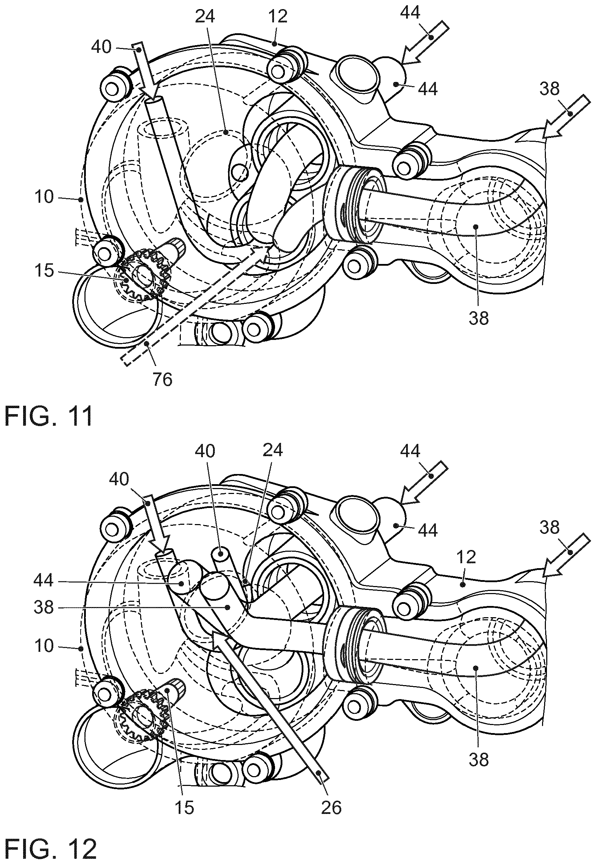

Fig. 11 veranschaulicht Volumenströme, insbesondere für die alternative Ausführungsform eines erfindungsgemäßen Kühlmittelverteilungsmoduls gemäß Fig. 9, für eine erste Stellung des Drehschiebers 16. Hierbei sind in Fig. 11 funktionsgleiche Teile mit gleichen Bezugszeichen versehen wie in den Fig. 1 bis 10, so dass zu deren Erläuterung auf die obige Beschreibung der Fig. 1 bis 10 verwiesen wird. In der ersten Stellung des Drehschiebers 16 ist der dritte Anschluss 24 durch die erste Stirnwand 48 geschlossen und der erste, zweite und vierte Anschluss 28, 36 und 42 sind geöffnet. Dadurch ergibt sich eine Bypass-Strömung 76 für die Wärmesenke, da kein Volumenstrom 26 zur Wärmesenke möglich ist. Der siebte Kühlmittelstrom 40 von der Kühlmittel-Umwälzpumpe, der vierte Kühlmittelstrom 44 von einer zweiten Wärmequelle, wie beispielsweise einem Zylinderkopf einer Brennkraftmaschine, und der zweite Kühlmittelstrom 38 von einer ersten Wärmequelle, wie beispielsweise einem Zylinderkurbelgehäuse einer Brennkraftmaschine, werden unter Umgehung der Wärmesenke in dem Drehschieber direkt zum dritten Anschluss 28 und damit zur Kühlmittelpumpe geleitet. Dies entspricht einer Stellung des Drehschiebers 16, bei der möglichst schnell eine vorbestimmte Betriebstemperatur innerhalb des Kühlsystems erreicht und wenig Wärmeenergie aus dem Kühlmittelsystem abgegeben werden soll.

Fig. 12 veranschaulicht Volumenströme, insbesondere für die alternative Ausführungsform eines erfindungsgemäßen Kühlmittelverteilungsmoduls gemäß Fig. 9, für eine zweite Stellung des Drehschiebers 16. Hierbei sind in Fig. 12 funktionsgleiche Teile mit gleichen Bezugszeichen versehen wie in den Fig. 1 bis 11, so dass zu deren Erläuterung auf die obige Beschreibung der Fig. 1 bis 11 verwiesen wird. In der zweiten Stellung des Drehschiebers 16 ist der erste Anschluss 28 durch die zweite Stirnwand 50 geschlossen und der zweite, dritte und vierte Anschluss 36, 24 und 42 sind geöffnet. Auf diese Weise werden der siebte Kühlmittelstrom 40 von der Kühlmittel-Umwälzpumpe, der vierte Kühlmittelstrom 44 von einer zweiten Wärmequelle, wie beispielsweise einem Zylinderkopf einer Brennkraftmaschine, und der zweite Kühlmittelstrom 38 von einer ersten Wärmequelle, wie beispielsweise einem Zylinderkurbelgehäuse einer Brennkraftmaschine, gemeinsam zum dritten Anschluss 24 und damit als dritter Kühlmittelstrom 26 zur Wärmesenke, wie beispielsweise einem Kühler, geleitet. Andererseits erhält die Kühlmittelpumpe als ersten Kühlmittelstrom 30 keine Anteile aus dem ersten Anschluss 28 sondern lediglich über den Hauptkühlmittelkühler-Anschlussflansch 18 aus dem fünften Kühlmittelstrom 32 von der Wärmesenke, wie beispielsweise einem Kühler. Mit anderen Worten saugt die Kühlmittelpumpe lediglich von der Wärmesenke Kühlmittel ab und alle anderen Kühlmittelströme werden über die Wärmesenke geführt. Diese zweite Stellung des Drehschiebers 16 entspricht dem Betrieb nach Erreichen der vorbestimmten Betriebstemperatur und maximaler Abgabe von Wärmeenergie aus dem Kühlsystem über die Wärmesenke an eine Umgebung. Im Gegensatz zur ersten Ausführungsform gemäß der Fig. 1 bis 8 ist bei der zweiten Ausführungsform gemäß Fig. 9 bis 12 eine Umgehung des Thermostates nicht möglich.

Durch die Geometrie der Steueröffnungen 60, 62, 64, 66 und 68 sind auch Zwischenstellungen zwischen der ersten und zweiten Stellung möglich, wobei der Strömungsquerschnitt an den Anschlüssen 24, 28, 36, 42 variiert wird. Auf diese Weise ergibt sich eine größere oder kleinere Teilströmung als Bypass-Strömung 76 mit entsprechend kleinerer oder größerer dritter Kühlmittelströmung 26 zu der Wärmesenke. Auf diese Weise kann die Wärmeabgabe aus dem Kühlsystem über die Wärmesenke entsprechend der Wärmeabgabe der Wärmequellen reguliert werden, so dass eine vorbestimmte Betriebstemperatur konstant gehalten werden kann.

Die Erfindung umfasst einen Drehschieber innerhalb des Kühlwasserreglers bzw. Kühlmittelverteilungsmoduls, welcher durch den Aktuator 14 angetrieben wird. Die Regelung erfolgt durch ein Steuergerät, in welchem die von der Wärmequelle, wie beispielsweise einem Aggregat oder einer Brennkraftmaschine, benötigten Kühlmittelvolumenströme in einem Kennfeld hinterlegt sind. Der Drehschieber 16 weist sowohl auf der Zylinderwand 46, als auch beiden Stirnwänden 48, 50 Steuerschlitze bzw. Steueröffnungen 60, 62, 64, 66, 68 auf. Durch Verdrehen des Drehschiebers 16 geben diese Schlitze bzw. Steueröffnungen 60, 62, 64, 66, 68 bestimmte Kanäle bzw. Anschlüsse 24, 28, 36, 42 bzgl. eines Strömungsquerschnittes für Kühlmittel voll oder nur zum Teil frei. Die Anordnung und Ausprägung der Steuerschlitze bzw. Steueröffnungen 60, 62, 64, 66, 68 ermöglicht damit sowohl das Einstellen diskreter Zustände mehrere Volumenströme als auch die Feindosierung eines Volumenstroms bei Erhalten weiterer diskreter Zustände. Durch die serielle Anordnung von zwei Kanälen bzw. Anschlüssen 28, 42 auf einer Steuer-Spur (zweite Stirnwand 50) des Drehschiebers 16 können beide Kanäle bzw. Anschlüsse 28, 42 mit einem Steuerschlitz bzw. einer Steueröffnung 62 (zweite Ausführungsform gemäß Fig. 9 und 10) geregelt werden. So ist ein gleitender Übergang von einem Anschluss in den anderen Anschluss möglich. Die Abdichtung zwischen Drehschieber 16 und Steueröffnungen 60, 62, 64, 66, 68 im Gehäuse 10, 12 erfolgt durch die Verwendung von Dichtungspaketen 52, 54, 56, 58. Dabei bilden die stirnseitigen Dichtungspakete 52, 56, 58 zugleich die axiale Lagerung des Drehschiebers 16.

### Bezugszeichenliste

- 10: Gehäuseoberteil
- 12: Gehäuseunterteil
- 14: Aktuator
- 15: Antriebwelle
- 16: Drehschieber
- 18: Hauptkühlmittelkühler-Anschlussflansch
- 20: Zylinderkurbelgehäuse-Anschlussflansch
- 22: Thermostat
- 24: dritter Anschluss
- 26: dritter Kühlmittelstrom: von dem Gehäuse 10, 12 zu einer Wärmesenke
- 28: erster Anschluss
- 30: erster Kühlmittelstrom: von dem Gehäuse 10, 12 zu einer Kühlmittelpumpe
- 32: fünfter Kühlmittelstrom: von der Wärmesenke zu dem Gehäuse 10, 12
- 34: sechster Kühlmittelstrom: von dem Gehäuse 10, 12 zu einer Kühlmittel-Umwälzpumpe
- 36: zweiter Anschluss
- 38: zweiter Kühlmittelstrom: von einer ersten Wärmequelle, wie beispielsweise einem Zylinderkurbelgehäuse einer Brennkraftmaschine, zu dem Gehäuse 10, 12
- 40: siebter Kühlmittelstrom: von der Kühlmittel-Umwälzpumpe zu dem Gehäuse 10, 12
- 42: vierter Anschluss
- 44: vierter Kühlmittelstrom: von einer zweiten Wärmequelle, wie beispielsweise einem Zylinderkopf einer Brennkraftmaschine zu dem Gehäuse 10, 12
- 46: Hohlzylinder mit Zylinderwand
- 48: erste Stirnwand
- 50: zweite Stirnwand
- 52: drittes Dichtungspaket
- 54: zweites Dichtungspaket
- 56: viertes Dichtungspaket
- 58: erstes Dichtungspaket
- 60: erste Steueröffnung
- 62: zweite Steueröffnung
- 64: dritte Steueröffnung
- 66: kreisförmige vierte Steueröffnung
- 68: schlitzförmige fünfte Steueröffnung
- 70: Bipode-Gelenk
- 72: Aufnahme
- 74: Innenverzahnung an der ersten Stirnwand 48
- 76: Bypass-Strömung

## Patentansprüche

1. Kühlmittelverteilungsmodul für einen Kühlmittelkreislauf, der mindestens einen Kühlmittelkanal zu mindestens einer Wärmequelle und mindestens einen Kühlmittelkanal zu einer Wärmesenke aufweist, insbesondere für ein Aggregat, insbesondere für eine Kraftmaschine, insbesondere für eine Brennkraftmaschine, mit einem Gehäuse (10, 12) mit mindestens drei von Kühlmittel durchströmbaren Anschlüssen (24, 28, 36, 42) zum fluidleitenden Verbinden mit den mindestens zwei Kühlmittelkanälen, wobei in dem Gehäuse (10, 12) ein relativ zum Gehäuse (10, 12) drehbarer Drehschieber (16) mit Steueröffnungen (60, 62, 64, 66, 68) angeordnet ist, welcher mit den Steueröffnungen (60, 62, 64, 66, 68) wahlweise fluidleitende Verbindungen zwischen den Anschlüssen (24, 28, 36, 42) mit variierendem Strömungsquerschnitt herstellt oder unterbricht, wobei an jedem Anschluss (24, 28, 36, 42) mindestens ein Dichtungspaket (52, 54, 56, 58) zwischen dem Gehäuse (10, 12) und dem Drehschieber (16) derart angeordnet ist, dass jedes Dichtungspaket (52, 54, 56, 58) einen Fluid leitenden Kanal zwischen dem Drehschieber (16) und dem Gehäuse (10, 12) ausbildet und diesen Fluid leitenden Kanal an einer Anschlagfläche zwischen Dichtungspaket (52, 54, 56, 58) und Gehäuse (10, 12) einerseits sowie zwischen Dichtungspaket (52, 54, 56, 58) und Drehschieber (16) andererseits fluiddicht abdichtet, **dadurch gekennzeichnet, dass** der Drehschieber (16) als Hohlzylinder mit Zylinderwand (46) ausgebildet ist, welcher in axialer Richtung an einem ersten Ende eine erste Stirnwand (48) und an einem axial gegenüberliegenden zweiten Ende eine zweite Stirnwand (50) aufweist, wobei in der Zylinderwand (46) des Hohlzylinders, in der ersten Stirnwand (48) und in der zweiten Stirnwand (50) jeweils mindestens eine Steueröffnung (60, 62, 64, 66, 68) ausgebildet ist.

2. Kühlmittelverteilungsmodul nach Anspruch 1, **dadurch gekennzeichnet, dass** mindestens zwei der Dichtungspakete (52, 56, 58) derart angeordnet und ausgebildet sind, dass diese eine axiale Führung des Drehschiebers (16) innerhalb des Gehäuses (10, 12) ausbilden.

3. Kühlmittelverteilungsmodul nach Anspruch 1 oder 2, **dadurch gekennzeichnet, dass** das Gehäuse (10, 12) einen ersten Anschluss (28) zum fluidleitenden Verbinden mit einem ersten Kühlmittelstrom (30) von dem Gehäuse (10, 12) zu einer Kühlmittel-Umwälzpumpe, einen zweiten Anschluss (36) zum fluidleitenden Verbinden mit einem siebten Kühlmittelstrom (40) von einer Kühlmittel-Umwälzpumpe zu dem Gehäuse (10, 12) und mit einem zweiten Kühlmittelstrom (38) von einer ersten Wärmequelle, insbesondere einem Zylinderkurbelgehäuse, zu dem Gehäuse (10, 12), einen dritten Anschluss (24) zum fluidleitenden Verbinden mit einem dritten Kühlmittelstrom (26) von dem Gehäuse (10, 12) zu der Wärmesenke, insbesondere in Form eines Kühlers, und einen vierten Anschluss (42) zum fluidleitenden Verbinden mit einem vierten Kühlmittelstrom (44) von einer zweiten Wärmequelle, insbesondere einem Zylinderkopf, zum Gehäuse (10, 12) aufweist.

4. Kühlmittelverteilungsmodul nach Anspruch 1 oder 2, **dadurch gekennzeichnet, dass** der erste und vierte Anschluss (28, 42) an der zweiten Stirnwand (50) des Drehschiebers (16), der zweite Anschluss (36) an der Zylinderwandung (46) des Drehschiebers (16) und der dritte Anschluss (24) an der ersten Stirnwand (48) des Drehschiebers (16) angeordnet ist.

5. Kühlmittelverteilungsmodul nach mindestens einem der Ansprüche 3 oder 4, **dadurch gekennzeichnet, dass** in dem zweiten Anschluss (36) ein Thermostatventil (22) für den zweiten Kühlmittelstrom (38) von der ersten Wärmequelle zu dem Gehäuse (10, 12) angeordnet ist.

6. Kühlmittelverteilungsmodul nach mindestens einem der vorhergehenden Ansprüche, **dadurch gekennzeichnet, dass** in der ersten Stirnwand (48) eine erste Steueröffnung (60) für den dritten Anschluss (24), in der zweiten Stirnwand (50) eine zweite und eine dritte Steueröffnung (62, 64) für den ersten und vierten Anschluss (28, 42) sowie in der Zylinderwand (46) des Drehschiebers (16) eine vierte und eine fünfte Steueröffnung (66, 68) für den zweiten Anschluss (36) ausgebildet sind.

7. Kühlmittelverteilungsmodul nach Anspruch 6, **dadurch gekennzeichnet, dass** die erste, zweite, dritte und vierte Steueröffnung (60, 62, 64, 66) derart angeordnet und ausgebildet sind, dass in einer ersten Stellung des Drehschiebers (16) der dritte Anschluss (24) geschlossen und der erste, zweite und vierte Anschluss (28, 36, 42) geöffnet sind.

8. Kühlmittelverteilungsmodul nach mindestens einem der vorhergehenden Ansprüche, **dadurch gekennzeichnet, dass** ein Aktuator (14), insbesondere ein Elektromotor, zum Verstellen des Drehschiebers (16) an dem Kühlmittelverteilungsmodul angeordnet ist, wobei eine Drehachse (15) des Aktuators (14) mit einer Drehachse des Drehschiebers (16) drehfest verbunden ist.

9. Kühlmittelverteilungsmodul nach Anspruch 8, **dadurch gekennzeichnet, dass** ein Steuergerät zum Ansteuern des Aktuators (14) vorgesehen ist, wobei in dem Steuergerät Werte für Kühlmittelvolumenströme in Abhängigkeit von einem Betriebszustand der Wärmequelle und/oder der Wärmesenke in einem Kennfeld abgespeichert sind.

10. Kühlmittelverteilungsmodul nach mindestens einem der vorhergehenden Ansprüche, **dadurch gekennzeichnet, dass** der Hohlzylinder mit Zylinderwand (46) und die erste Stirnwand (48) einstückig und die zweite Stirnwand (50) als separates Bauteil ausgebildet sind.

## Claims

1. Coolant distribution module for a coolant circuit which has at least one coolant channel to at least one heat source and at least one coolant channel to a heat sink, in particular for a machine, in particular for a power engine, in particular for an internal combustion engine, having a housing (10, 12) with at least three ports (24, 28, 36, 42) through which coolant can flow and which serve for fluidic connection to the at least two coolant channels, wherein, in the housing (10, 12), there is arranged a rotary slide valve (16) which is rotatable relative to the housing (10, 12) and which has control openings (60, 62, 64, 66, 68), which rotary slide valve, by means of the control openings (60, 62, 64, 66, 68), selectively produces fluidic connections with a varying flow cross section, or shuts off such connections, between the ports (24, 28, 36, 42), wherein, at each port (24, 28, 36, 42), at least one seal assembly (52, 54, 56, 58) is arranged between the housing (10, 12) and the rotary slide valve (16) such that each seal assembly (52, 54, 56, 58) forms a fluid-conducting channel between the rotary slide valve (16) and the housing (10, 12) and seals off said fluid-conducting channel in fluid-tight fashion at an abutment surface between seal assembly (52, 54, 56, 58) and housing (10, 12) at one side and between seal assembly (52, 54, 56, 58) and rotary slide valve (16) at the other side, **characterized in that** the rotary slide valve (16) is formed as a hollow cylinder with a cylinder wall (46) which, in an axial direction, has a first face wall (48) at a first end and has a second face wall (50) at on axially opposite second end, wherein in each case at least one control opening (60, 62, 64, 66, 68) is formed in the cylinder wall (46) of the hollow cylinder, in the first face wall (48) and in the second face wall (50).

2. Coolant distribution module according to Claim 1, **characterized in that** at least two of the seal assemblies (52, 56, 58) are arranged and formed so as to form an axial guide of the rotary slide valve (16) within the housing (10, 12).

3. Coolant distribution module according to Claim 1 or 2, **characterized in that** the housing (10, 12) has a first port (28) for fluidic connection to a first coolant flow (30) from the housing (10, 12) to a coolant circulating pump, a second port (36) for fluidic connection to a seventh coolant flow (40) from a coolant circulating pump to the housing (10, 12) and to a second coolant flow (38) from a first heat source, in particular a cylinder crankcase, to the housing (10, 12), a third port (24) for fluidic connection to a third coolant flow (26) from the housing (10, 12) to the heat sink, in particular in the form of a cooler, and a fourth port (42) for fluidic connection to a fourth coolant flow (44) from a second heat source, in particular a cylinder head, to the housing (10, 12).

4. Coolant distribution module according to Claim 1 or 2, **characterized in that** the first and fourth port (28, 42) are arranged on the second face wall (50) of the rotary slide valve (16), the second port (36) is arranged on the cylinder wall (46) of the rotary slide valve (16), and the third port (24) is arranged on the first face wall (48) of the rotary slide valve (16).

5. Coolant distribution module according to at least one of Claims 3 and 4, **characterized in that**, in the second port (36), there is arranged a thermostat valve (22) for the second coolant flow (38) from the first heat source to the housing (10, 12).

6. Coolant distribution module according to at least one of the preceding claims, **characterized in that** a first control opening (60) for the third port (24) is formed in the first face wall (48), a second and a third control opening (62, 64) for the first and fourth ports (28, 42) are formed in the second face wall (50), and a fourth and a fifth control opening (66, 68) for the second port (36) are formed in the cylinder wall (46) of the rotary slide valve (16).

7. Coolant distribution module according to Claim 6, **characterized in that** the first, second, third and fourth control opening (60, 62, 64, 66) are arranged and formed such that, in a first position of the rotary slide valve (16), the third port (24) is closed and the first, second and fourth ports (28, 36, 42) are open.

8. Coolant distribution module according to at least one of the preceding claims, **characterized in that** an actuator (14), in particular an electric motor, for adjusting the rotary slide valve (16) is arranged on the coolant distribution module, wherein a rotary axle (15) of the actuator (14) is connected rotationally conjointly to a rotary axle of the rotary slide valve (16).

9. Coolant distribution module according to Claim 8, **characterized in that** a control unit for activating the actuator (14) is provided, wherein, in the control unit, in a characteristic map, there are stored values for coolant volume flows as a function of an operating state of the heat source and/or of the heat sink.

10. Coolant distribution module according to at least one of the preceding claims, **characterized in that** the hollow cylinder with cylinder wall (46) and the first face wall (48) are formed in one piece, and the second face wall (50) is formed as a separate component.

## Revendications

1. Module de répartition de réfrigérant pour un circuit de réfrigérant, qui présente au moins un canal de réfrigérant conduisant à au moins une source de chaleur et au moins un canal de réfrigérant conduisant à un puits de chaleur, en particulier pour un groupe, en particulier pour un moteur, en particulier pour un moteur à combustion interne, comprenant un boîtier (10, 12) avec au moins trois raccords (24, 28, 36, 42) pouvant être parcourus par du réfrigérant pour la connexion fluidique aux au moins deux canaux de réfrigérant, une soupape rotative (16) pouvant tourner par rapport au boîtier (10, 12), avec des ouvertures de commande (60, 62, 64, 66, 68), étant disposée dans le boîtier (10, 12), laquelle établit ou interrompt, avec les ouvertures de commande (60, 62, 64, 66, 68), des liaisons fluidiques sélectives entre les raccords (24, 28, 36, 42) par le biais d'une section transversale d'écoulement variable, au moins une garniture d'étanchéité (52, 54, 56 58) étant disposée au niveau de chaque raccord (24, 28, 36, 42) entre le boîtier (10, 12) et la soupape rotative (16) de telle sorte que chaque garniture d'étanchéité (52, 54, 56, 58) constitue un canal conduisant les fluides entre la soupape rotative (16) et le boîtier (10, 12) et ce canal conduisant les fluides réalisant l'étanchéité aux fluides au niveau d'une surface de butée entre la garniture d'étanchéité (52, 54, 56, 58) et le boîtier (10, 12) d'une part et entre la garniture d'étanchéité (52, 54, 56, 58) et la soupape rotative (16) d'autre part, **caractérisé en ce que** la soupape rotative (16) est réalisée sous forme de cylindre creux avec une paroi de cylindre (46) qui présente une première paroi frontale (48) dans la direction axiale au niveau d'une première extrémité et une deuxième paroi frontale (50) au niveau d'une deuxième extrémité opposée axialement, à chaque fois au moins une ouverture de commande (60, 62, 64, 66, 68) étant réalisée dans la paroi de cylindre (46) du cylindre creux, dans la première paroi frontale (48) et dans la deuxième paroi frontale (50).

2. Module de répartition de réfrigérant selon la revendication 1, **caractérisé en ce qu'**au moins deux des garnitures d'étanchéité (52, 56, 58) sont disposées et réalisées de telle sorte qu'elles constituent un guidage axial de la soupape rotative (16) à l'intérieur du boîtier (10, 12).

3. Module de répartition de réfrigérant selon la revendication 1 ou 2, **caractérisé en ce que** le boîtier (10, 12) présente un premier raccord (28) pour la connexion fluidique à un premier flux de réfrigérant (30) allant du boîtier (10, 12) à une pompe de recirculation de réfrigérant, un deuxième raccord (36) pour la connexion fluidique à un septième flux de réfrigérant (40) allant d'une pompe de recirculation de réfrigérant au boîtier (10, 12) et à un deuxième flux de réfrigérant (38) allant d'une première source de chaleur, en particulier un bloc-moteur, au boîtier (10, 12), un troisième raccord (24) pour la connexion fluidique à un troisième flux de réfrigérant (26) allant du boîtier (10, 12) au puits de chaleur, en particulier sous la forme d'un radiateur, et un quatrième raccord (42) pour la connexion fluidique à un quatrième flux de réfrigérant (44) allant d'une deuxième source de chaleur, en particulier une culasse, au boîtier (10, 12).

4. Module de répartition de réfrigérant selon la revendication 1 ou 2, **caractérisé en ce que** le premier et le quatrième raccord (28, 42) sont disposés au niveau de la deuxième paroi frontale (50) de la soupape rotative (16), le deuxième raccord (36) est disposé au niveau de la paroi de cylindre (46) de la soupape rotative (16) et le troisième raccord (24) est disposé au niveau de la première paroi frontale (48) de la soupape rotative (16).

5. Module de répartition de réfrigérant selon au moins l'une des revendications 3 ou 4, **caractérisé en ce que** dans le deuxième raccord (36) est disposée une soupape thermostatique (22) pour le deuxième flux de réfrigérant (38) allant de la première source de chaleur au boîtier (10, 12).

6. Module de répartition de réfrigérant selon au moins l'une des revendications précédentes, **caractérisé en ce que** dans la première paroi frontale (48) est disposée une première ouverture de commande (60) pour le troisième raccord (24), dans la deuxième paroi frontale (50) sont disposées une deuxième et une troisième ouverture de commande (62, 64) pour le premier et le quatrième raccord (28, 42) et dans la paroi cylindrique (46) de la soupape rotative (16) sont disposées une quatrième et une cinquième ouverture de commande (66, 68) pour le deuxième raccord (36) .

7. Module de répartition de réfrigérant selon la revendication 6, **caractérisé en ce que** les première, deuxième, troisième et quatrième ouvertures de commande (60, 62, 64, 66) sont disposées et réalisées de telle sorte que dans une première position de la soupape rotative (16), le troisième raccord (24) soit fermé et le premier, le deuxième et le quatrième raccord (28, 36, 42) soient ouverts.

8. Module de répartition de réfrigérant selon au moins l'une des revendications précédentes, **caractérisé en ce qu'**un actionneur (14), en particulier un moteur électrique, pour régler la soupape rotative (16) est prévu sur le module de répartition de réfrigérant, un axe de rotation (15) de l'actionneur (14) étant connecté de manière solidaire en rotation à un axe de rotation de la soupape rotative (16).

9. Module de répartition de réfrigérant selon la revendication 8, **caractérisé en ce qu'**un appareil de commande pour commander l'actionneur (14) est prévu, des valeurs pour des débits volumiques de réfrigérant en fonction d'un état de fonctionnement de la source de chaleur et/ou du puits de chaleur dans l'appareil de commande étant stockées dans un champ caractéristique.

10. Module de répartition de réfrigérant selon au moins l'une des revendications précédentes, **caractérisé en ce que** le cylindre creux est réalisé avec une paroi de cylindre (46) et la première paroi frontale (48) d'une seule pièce et la deuxième paroi frontale (50) en tant que composant séparé.
